# DEMANDE DE BREVET EUROPEEN

(11) **EP 4 474 727 A1**
(43) Date de publication de la demande: **11.12.2024**
(21) Numéro de dépôt: 24179495.7
(22) Date de dépôt: 03.06.2024
(51) Int. Cl.: F24S 25/10, F24S 25/70, H02S 20/23, H02S 20/30

(54) **ENSEMBLE POUR LE SOUTIEN À L'ÉTAT INCLINÉ DE PANNEAU SOLAIRE ET INSTALLATION POUR LA PRODUCTION D ÉNERGIE COMPRENANT UN TEL ENSEMBLE**

(30) Priorité: 05.06.2023 FR 2305588
(71) Demandeur: Dome Solar, 44400 Rezé (FR)
(72) Inventeur: TSIMOPOULOS, Loannis, 44200 Nantes (FR)
(74) Mandataire: Derriennic, Tangui Jean

(57) **Abrégé**

Ensemble (1) pour le soutien à l'état incliné de panneau (11) solaire comprenant deux montants (2) et deux pièces de liaison (3) couplables chacune à une extrémité d'un montant (2) pour s'interposer entre le montant (2) et le panneau (11) à soutenir, les montants (2) sont de longueur différente, chaque montant (2) et sa pièce de liaison (3) associée comprennent, pour leur couplage à emboîtement, des parties de formes complémentaires dites l'une, mâle (21 ; 31) , l'autre, femelle (32 ; 22), la partie femelle (22), ou respectivement mâle (21), de chaque montant (2) est identique d'un montant (2) à un autre, chaque pièce de liaison (3) est munie, à l'opposé de sa partie mâle (31), ou respectivement femelle (32), d'une surface plane (4) et est, à l'état couplé à emboîtement avec le montant (2) associé, une pièce de liaison (3) orientable autour d'un axe (YY') orthogonal à l'axe longitudinal (XX') du montant (2).

## Description

La présente invention concerne un ensemble pour le soutien à l'état incliné de panneau solaire, ainsi qu'une installation pour la production d'énergie comprenant un tel ensemble.

Elle concerne en particulier un ensemble pour le soutien à l'état incliné de panneau solaire, ledit ensemble comprenant au moins deux montants et deux pièces de liaison, chaque pièce de liaison étant couplable à une extrémité d'un montant pour s'interposer entre le montant et le panneau à soutenir.

Les panneaux solaires nécessitent, en particulier pour leur montage sur une toiture, leur soutien à l'état horizontal ou incliné. Les fabricants de panneaux solaires imposent une distance entre les points de soutien appelée plage de fixation qui peut varier d'un fabricant à un autre. La difficulté est pour un opérateur de disposer d'une solution de soutien dudit panneau polyvalente pour s'adapter aux différentes conceptions de panneau.

Un but de l'invention est de proposer un ensemble du type précité dont la conception permet de s'adapter à des panneaux présentant une plage de fixation variable d'un panneau à un autre sans nuire à la simplicité et à la facilité de mise en oeuvre dudit ensemble.

Un autre but de l'invention est de proposer un ensemble du type précité dont le nombre de type de pièces peut être réduit sans nuire à la polyvalence dudit ensemble.

A cet effet, l'invention a pour objet un ensemble pour le soutien à l'état incliné de panneau solaire, ledit ensemble comprenant au moins deux montants et deux pièces de liaison, chaque pièce de liaison étant couplable à une extrémité d'un montant pour s'interposer entre le montant et le panneau à soutenir, caractérisé en ce que les montants, qui présentent chacun un axe longitudinal, sont de longueur différente, en ce que chaque montant et sa pièce de liaison associée comprennent, pour leur couplage qui est un couplage à emboîtement, des parties de formes complémentaires dites l'une, mâle, l'autre, femelle, en ce que la partie femelle, ou respectivement mâle, de chaque montant est identique d'un montant à un autre, en ce que chaque pièce de liaison est munie, à l'opposé de sa partie mâle, ou respectivement femelle, d'une surface plane pour former une surface d'appui du panneau à soutenir, et en ce que chaque pièce de liaison est, à l'état couplé à emboîtement avec le montant associé, une pièce de liaison orientable montée à pivotement autour d'un axe orthogonal à l'axe longitudinal du montant pour pouvoir faire varier l'angle formé par la surface plane de la pièce de liaison avec l'axe longitudinal du montant. Le fait de disposer de montants dont la partie mâle, ou respectivement femelle, est identique d'un montant à un autre permet de simplifier la conception des pièces de liaison. La réalisation d'un couplage à emboîtement avec une possibilité d'orientation angulaire de la pièce de liaison et du montant à l'état couplé à emboîtement permet de couvrir une large gamme de panneaux solaires en adaptant l'orientation angulaire de la pièce de liaison et par suite la position de la surface plane de la pièce de liaison en fonction de l'écartement entre lesdits montants pour autoriser dans chaque position angulaire un parfait soutien.

Selon un mode de réalisation de l'invention, la partie mâle, ou respectivement femelle, de chaque pièce de liaison est identique d'une pièce de liaison à une autre. Il en résulte un risque moindre d'erreur dans le montage.

Selon un mode de réalisation de l'invention, chaque pièce de liaison est identique d'une pièce de liaison à une autre. Il en résulte un nombre réduit de type de pièces.

Selon un mode de réalisation de l'invention, le couplage à emboîtement entre chaque montant et la pièce de liaison associée est un couplage à emboîtement coulissant suivant une direction parallèle à l'axe autour duquel la pièce de liaison est montée à pivotement.

Selon un mode de réalisation de l'invention, ledit ensemble comprend deux pièces de verrouillage, chaque pièce de verrouillage étant, à l'état couplé à emboîtement coulissant des parties mâle et femelle d'un montant et d'une pièce de liaison associée, montée mobile par rapport auxdites parties entre une position, dite de verrouillage du déplacement à coulissement desdites parties, dans laquelle elle vient à recouvrement desdites parties, pour interdire un déplacement à coulissement desdites parties, et une position, dite déverrouillée, dans laquelle les parties mâle et femelle sont découvertes pour autoriser un déplacement relatif à coulissement desdites parties entre elles.

Selon un mode de réalisation de l'invention, au moins l'une des pièces de verrouillage se présente sous forme d'une bague coulissante positionnable autour de la pièce de liaison à l'état désaccouplé des parties mâle et femelle complémentaires de la pièce de liaison et du montant. Cette conception permet un montage aisé de la pièce de verrouillage et un passage rapide par simple déplacement à coulissement de la pièce de verrouillage d'une position à une autre. La pièce de verrouillage peut ainsi être prémontée sur la pièce de liaison. Cette pièce de verrouillage est configurée pour, à l'état couplé du montant et de la pièce de liaison, passer par simple coulissement d'une position déverrouillée dans laquelle elle entoure la pièce de liaison dans une zone de la pièce de liaison disposée hors de la partie mâle ou femelle de ladite pièce de liaison à une position verrouillée dans laquelle elle entoure la pièce de liaison dans une zone de la pièce de liaison disposée dans la zone de la partie mâle ou femelle de ladite pièce de liaison la pièce de verrouillage. Cette pièce de verrouillage est, en position verrouillée et à l'état couplé du montant et de la pièce de liaison, en butée contre une surface d'appui portée par ledit montant.

Selon un mode de réalisation de l'invention, les parties femelle et mâle de formes complémentaires d'un montant et de la pièce de liaison associée se présentent, pour ladite partie femelle, sous forme d'un fourreau au moins partiellement cylindrique fendu longitudinalement ouvert à au moins l'une de ses extrémités, et pour ladite partie mâle, sous forme d'un corps allongé au moins partiellement cylindrique, et le corps de la partie mâle est, à l'état couplé à emboîtement desdites parties mâle et femelle, disposé au moins partiellement à l'intérieur du fourreau de la partie femelle. Cette configuration permet un déplacement relatif à pivotement du corps allongé et du fourreau autour d'un axe passant par un axe longitudinal dudit corps en fonction de l'orientation angulaire souhaitée entre la surface plane de la pièce de liaison et l'axe longitudinal dudit montant.

Selon un mode de réalisation de l'invention, chaque pièce de liaison comprend deux branches coudées reliées à l'une de leurs extrémités par la partie mâle, ou respectivement femelle, de la pièce de liaison, en ce que la portion de chaque branche qui s'étend entre le coude et l'extrémité libre de la branche forme une aile de la pièce de liaison, en ce que lesdites ailes sont coplanaires pour former la surface plane de la pièce de liaison, et en ce que lesdites ailes se développent longitudinalement suivant une direction transversale à la direction de développement longitudinal de la partie mâle, ou respectivement femelle, de la pièce de liaison qui est une partie allongée.

Selon un mode de réalisation de l'invention, chaque montant est muni, à l'opposé de sa partie mâle, ou respectivement femelle, de couplage à la pièce de liaison, d'une semelle formant une glissière d'axe longitudinal orthogonal à l'axe longitudinal du montant.

Selon un mode de réalisation de l'invention, l'axe longitudinal de la semelle du montant et l'axe longitudinal du fourreau constitutif de la partie femelle ou l'axe longitudinal du corps allongé constitutif de la partie mâle équipant ledit montant s'étendent suivant des directions parallèles.

Selon un mode de réalisation de l'invention, l'ensemble comprend au moins deux rails aptes à coopérer chacun à emboîtement à coulissement avec une semelle d'un montant.

L'invention a encore pour objet une installation pour la production d'énergie comprenant au moins un panneau solaire et un ensemble pour le soutien à l'état incliné dudit panneau solaire, caractérisé en ce que ledit ensemble est du type précité.

L'invention a encore pour objet un procédé de montage d'un ensemble du type précité, ledit procédé comprenant au moins les opérations suivantes :
- couplage par emboîtement de chaque montant avec une pièce de liaison
- positionnement à distance l'un de l'autre des montants disposés à l'état dressé
- orientation angulaire de chaque pièce de liaison par rapport au montant associé en fonction de la distance entre lesdits montants.

Selon un mode de mise en oeuvre du procédé dans lequel l'ensemble comprend au moins deux pièces de verrouillage, ledit procédé comprend en outre au moins une opération de montage de chaque pièce de verrouillage sur une pièce de liaison avant couplage par emboîtement de chaque montant avec une pièce de liaison.

### Brève description des dessins

L'invention sera bien comprise à la lecture de la description suivante d'exemples de réalisation, en référence aux dessins annexés dans lesquels :
[Fig. 1] représente une vue en perspective d'une installation conforme à l'invention dans laquelle le panneau est représenté en cours de positionnement en appui sur les pièces de liaison ;
[Fig.2] représente une vue schématique d'une installation dans laquelle les pièces de verrouillage ont été omises avec une vue de détail de la liaison d'une pièce de liaison avec un montant ;
[Fig.3] représente une vue schématique d'une installation dans laquelle les pièces de verrouillage ont été omises avec une vue de détail de la liaison d'une pièce de liaison avec un montant ;
[Fig.4] représente sous forme de 4 vues successives les étapes du couplage à emboîtement coulissant d'une pièce de liaison et d'un montant et du verrouillage dudit coulissement ;
[Fig.5] représente une vue en perspective d'une pièce de liaison et d'une pièce de verrouillage ;
[Fig.6] représente une vue en perspective partielle d'un ensemble au cours du couplage à emboîtement de la pièce de liaison et du montant ;
[Fig.7] représente une vue partielle en coupe d'un ensemble.

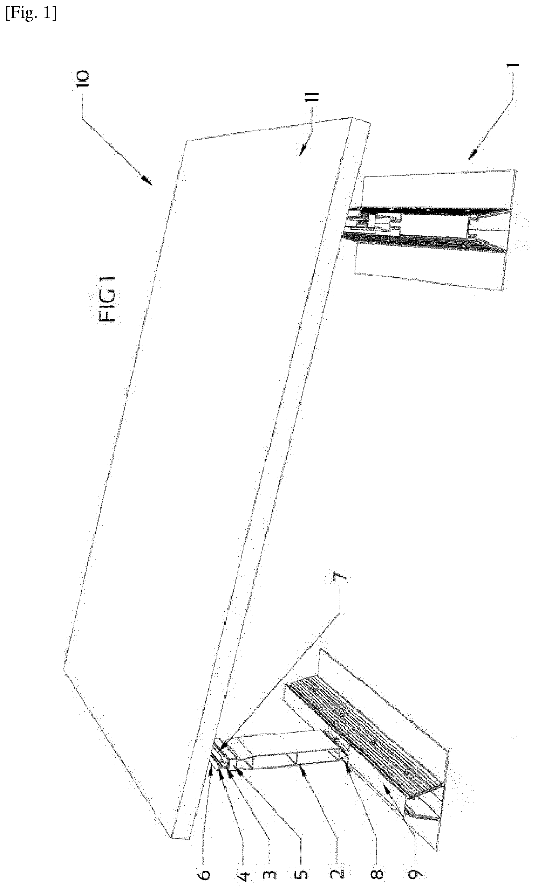

Comme mentionné ci-dessus, l'invention a pour objet un ensemble 1 pour le soutien à l'état incliné d'un panneau 11 solaire en vue de la réalisation d'une installation 10 de production d'énergie, conforme à celle représentée à la [Fig.1], et l'installation 10 de production d'énergie qui en résulte. L'ensemble 1 a pour objet de former une structure d'appui d'un panneau 11 solaire pour le maintien en position inclinée dudit panneau 11 solaire. A l'état soutenu par ledit ensemble 1, le panneau 11 solaire présente, à l'état positionné de l'installation 10 sur une surface plane horizontale, une inclinaison par rapport à ladite surface plane généralement comprise entre 7° et 13°.

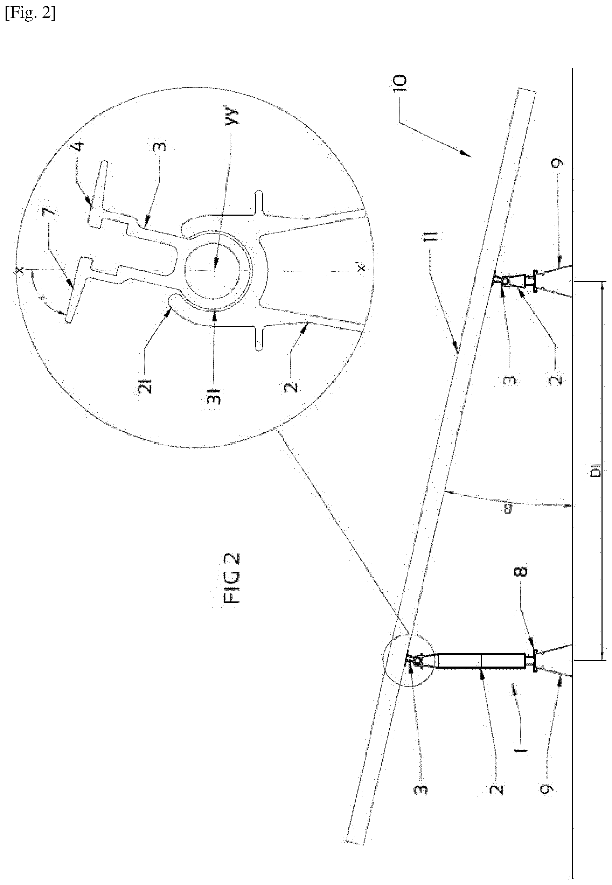

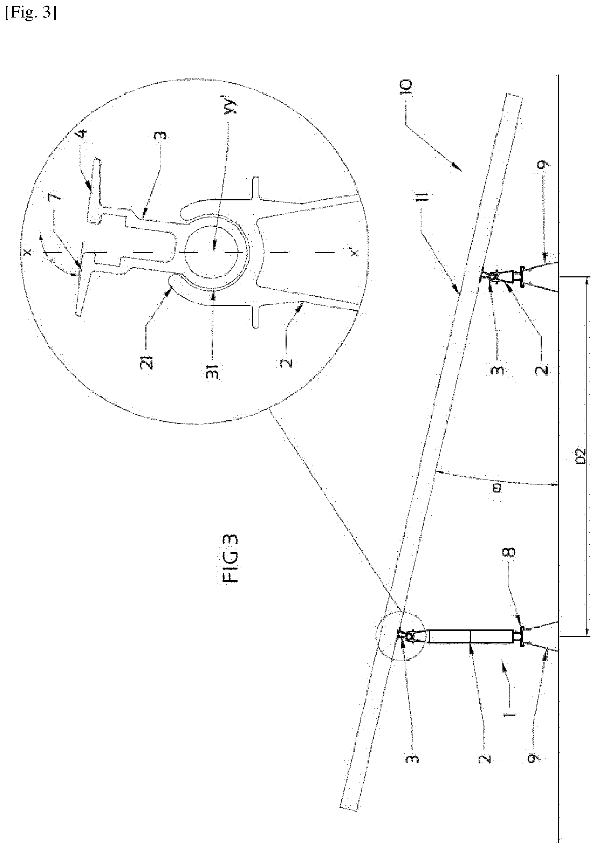

Cet ensemble 1 comprend, comme illustré aux figures 2 et 3, deux montants 2 et deux pièces de liaison 3. En configuration d'utilisation de l'ensemble 1, tel qu'illustré aux figures 1 à 3, chaque montant 2 est à l'état dressé et chaque pièce de liaison 3 est couplable à l'extrémité supérieure du montant 2 pour s'interposer entre le montant 2 et le panneau 11 à soutenir. Le panneau 11 à soutenir est destiné à reposer sur chaque pièce de liaison 3. Chaque montant 2 est ici réalisé en métal mais aurait pu, de manière similaire, être réalisé en matière de synthèse. Ce montant 2 peut être issu d'une lame profilée qui a été découpée transversalement suivant des lignes parallèles pour former, entre deux lignes transversales parallèles, un montant 2. Ce montant 2 présente ici deux faces en regard reliées entre elles par des entretoises pour former le corps allongé du montant 2. Chaque extrémité du corps se prolonge par une partie technique dont le rôle et la conception seront décrits ci-après.

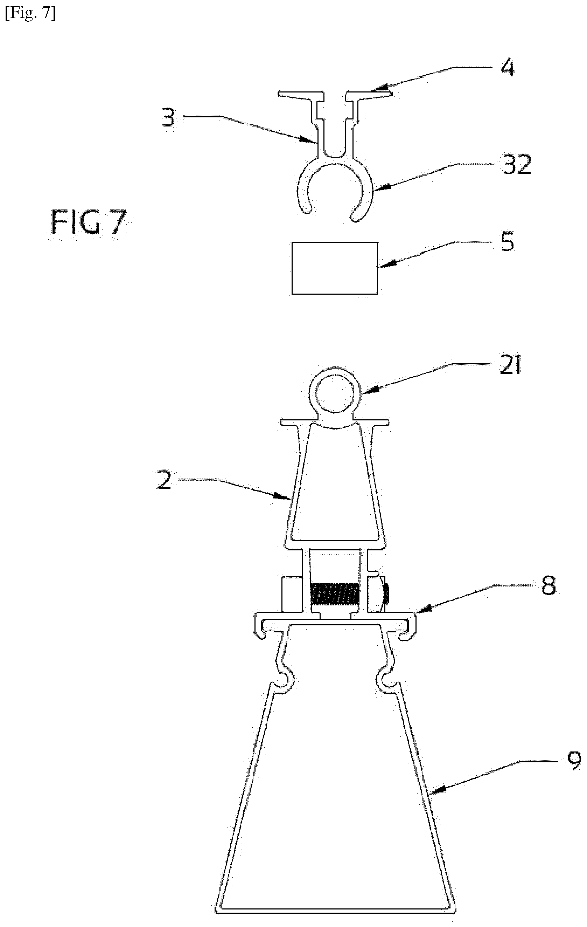

Chaque montant 2 présente donc un axe longitudinal XX'. Les montants 2 d'un ensemble 1 sont de longueurs différentes, comme illustré aux figures 1 à 3. À titre d'exemple, l'un des montants dudit ensemble 1 présente une longueur comprise entre 240 et 300 mm tandis que l'autre montant 2 dudit ensemble 1 présente une longueur comprise entre 50 et 110 mm. Généralement, la longueur de l'un des montants 2 est égal à au moins 2,7 fois la longueur de l'autre montant 2. Chaque montant 2 comprend, pour son couplage avec la pièce de liaison 3 associée, une partie femelle 22, comme illustré aux figures 2 à 4, ou une partie mâle 21, comme illustré à la [Fig.7]. Cette partie femelle 22, ou respectivement mâle 21, du montant 2 est coupable à emboîtement avec une partie mâle 31, ou respectivement femelle 32, de la pièce de liaison 3. On comprend au regard de ce qui précède que, pour un couplage à emboîtement du montant 2 et de la pièce de liaison 3 associée, les parties mâle et femelle complémentaires sont indifféremment ménagées, l'une, sur le montant 2, l'autre, sur la pièce de liaison 3. A chaque fois, dans les exemples représentés et indépendamment de leur positionnement, les parties femelle et mâle de forme complémentaire d'un montant 2 et de la pièce de liaison 3 associée se présentent pour ladite partie femelle, que ce soit la partie femelle 22 du montant 2 ou la partie femelle 32 de la pièce de liaison 3, sous forme d'un fourreau au moins partiellement cylindrique fendu longitudinalement et ouvert à au moins l'une de ses extrémités. Dans les exemples représentés, ce fourreau est ouvert à chacune de ses extrémités. Ces parties mâle et femelle de formes complémentaires d'un montant 2 et de la pièce de liaison 3 associée se présentent, pour la partie mâle 31 de la pièce 3 de liaison ou 21 du montant 2, sous forme d'un corps allongé au moins partiellement cylindrique. Le corps de la partie mâle est, à l'état couplé à emboîtement desdites parties mâle et femelle, disposé au moins partiellement à l'intérieur du fourreau de la partie femelle.

Les figures 1 à 6 illustrent le cas où la partie mâle est portée par la pièce de liaison 3 et la partie femelle par le montant 2. La [Fig.7] illustre le cas où la partie mâle est portée par le montant 2 et la partie femelle par la pièce de liaison 3.

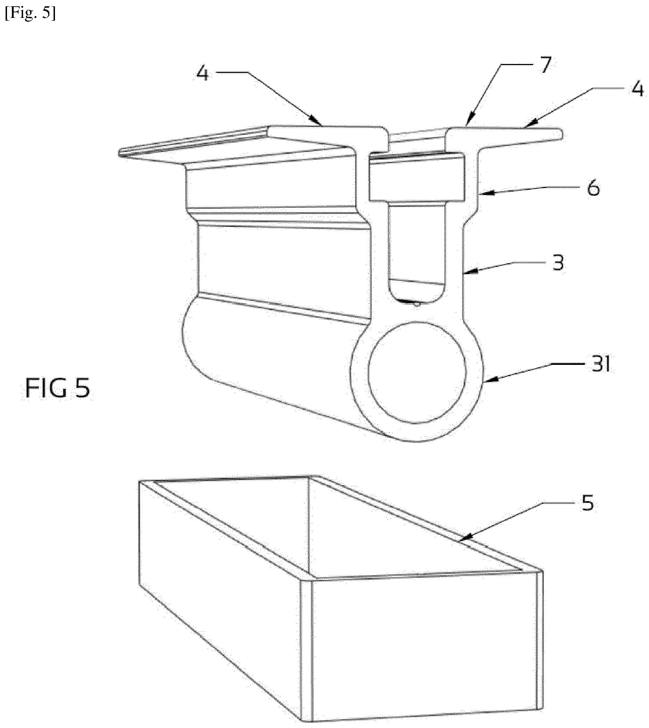

On note que dans tous ces modes de réalisation, la partie mâle 21 ou respectivement femelle 22 de chaque montant 2 est identique d'un montant 2 à un autre. Idéalement, la partie mâle 31, ou respectivement femelle 32, de chaque pièce de liaison 3 est identique d'une pièce de liaison 3 à une autre. Chaque pièce de liaison 3 est munie à l'opposé de sa partie mâle 31, ou respectivement femelle 32, d'une surface plane 4 pour former une surface d'appui du panneau 11 à soutenir. Chaque pièce de liaison 3 est, à l'état couplé à emboîtement avec le montant 2 associé à ladite pièce de liaison 3, orientable par pivotement autour d'un axe YY' orthogonal à l'axe longitudinal XX' du montant 2 pour pouvoir faire varier l'angle α formé par la surface plane 4 de la pièce de liaison 3 avec l'axe longitudinal XX' du montant 2. La surface plane 4 de chaque pièce de liaison 3 peut-être une surface continue ou discontinue, comme dans l'exemple représenté en particulier à la [Fig.5]. En pratique, chaque pièce de liaison 3 comprend deux branches 6 coudées reliées à l'une de leurs extrémités par la partie mâle 31, ou respectivement femelle 32, de la pièce de liaison 3. La portion de chaque branche 6, qui s'étend entre le coude et l'extrémité libre de la branche 6, forme une aile 7 de la pièce de liaison 3. Les ailes 7 sont coplanaires pour former la surface plane 4, en l'occurrence ici discontinue de la pièce de liaison 3. Lesdites ailes 7 se développent longitudinalement, c'est-à-dire depuis le coude en direction de l'extrémité libre de la branche 6, suivant une direction transversale à la direction de développement longitudinal de la partie mâle 31, ou respectivement femelle 32, de la pièce de liaison 3, qui est une partie allongée, comme expliqué ci-dessus.

Un exemple d'une pièce de liaison est plus particulièrement visible à la [Fig.5]. Dans cet exemple, la pièce de liaison 3 comprend une partie mâle 31, sous forme d'un corps allongé cylindrique. Les branches 6 coudées pour former chacune une branche en L prennent naissance à l'extérieur du cylindre, le long de deux lignes parallèles génératrices du cylindre. Lesdites lignes sont écartées l'une de l'autre d'un secteur angulaire inférieur à 60°. Ces branches 6 se développent à l'extérieur du cylindre de manière parallèle entre elles jusqu'à leur coude, au niveau duquel elles sont pliées à angle droit de manière divergente, c'est-à-dire en direction de l'extérieur de l'intervalle formé par lesdites premières portions de branches entre elles. Cela confère ainsi aux branches coudées, en coopération avec la partie mâle 31 à laquelle elles sont raccordées, une forme générale de U bordé au niveau de chacune de ses extrémités libres par l'aile 7 décrite ci-dessus. Le mode de réalisation des branches 6, tel que décrit ci-dessus, est identique lorsque la pièce de liaison 3 présente non plus une partie mâle 31 mais une partie femelle 32 sous forme d'un fourreau fendu longitudinalement, comme illustré à la [Fig.7].

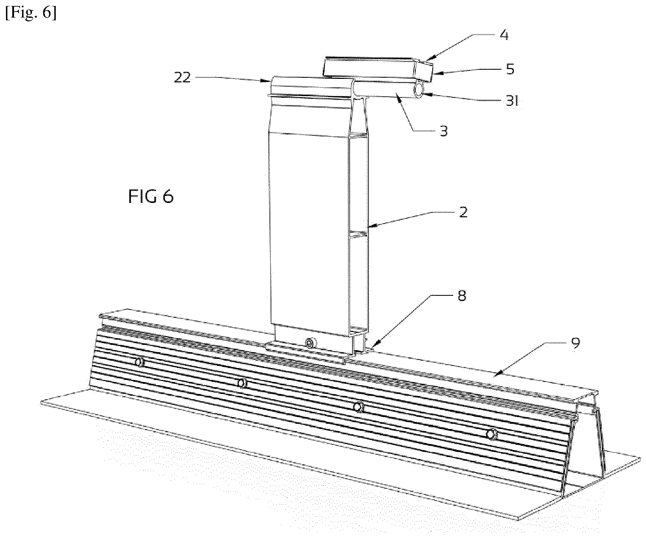

Dans les exemples représentés, chaque pièce de liaison 3 est identique d'une pièce de liaison 3 à une autre. Lorsque le corps de la partie mâle de la pièce de liaison 3 est, à l'état couplé à emboîtement desdites parties mâles et femelles, disposé au moins partiellement à l'intérieur du fourreau de la partie femelle du montant, comme illustré par exemple à la [Fig.6], ledit corps est apte à pivoter autour d'un axe passant par un axe longitudinal dudit corps en fonction de l'orientation angulaire souhaitée entre la surface plane 4 de la pièce de liaison 3 et l'axe longitudinal XX' dudit montant 2. De manière similaire, lorsque le corps de la partie mâle du montant 2 est, à l'état couplé à emboîtement des parties mâle et femelle, disposé au moins partiellement à l'intérieur du fourreau de la partie femelle de la pièce de liaison 3 associée, comme illustré à la [Fig.7], le fourreau est apte à pivoter autour d'un axe passant par un axe longitudinal du corps en fonction de l'orientation angulaire souhaitée entre la surface plane 4 de la pièce de liaison 3 et l'axe longitudinal XX' du montant 2. Un déplacement relatif à pivotement du corps et du fourreau autour de l'axe longitudinal du corps est toujours observé. Cet axe longitudinal du corps correspond à l'axe YY' orthogonal à l'axe longitudinal XX' du montant 2. Cette possibilité d'orientation angulaire de la pièce de liaison 3 par rapport au montant 2 autour d'un axe YY' orthogonal à l'axe longitudinal XX' du montant 2 pour pouvoir faire varier l'angle α formé par la surface plane 4 de la pièce de liaison 3 avec l'axe longitudinal XX' du montant 2 permet d'utiliser ledit ensemble 1 pour différents intervalles entre lesdits montants 2, chaque intervalle pouvant correspondre à une préconisation du fabricant du panneau 11 solaire en fonction des caractéristiques du panneau 11 solaire. Ainsi à la [Fig.2], la distance entre deux montants 2 est égale à D1 tandis que dans la [Fig.3], la distance entre les deux montants 2 est égale à D2 avec D2 supérieur à D1.

Il en résulte que l'angle α, tel que représenté à la [Fig.2], entre la surface plane 4 de la pièce de liaison 3 et l'axe longitudinal XX' du montant 2, est supérieur dans la [Fig.2] par rapport à la [Fig.3]. Ainsi, plus la distance entre montant 2 est importante, moins le panneau doit être incliné, comme l'illustre l'angle β définissant l'angle formé par le panneau avec le sol dans les figures 2 et 3 et donc plus l'angle α augmente. Cet ajustement de la position angulaire de la pièce de liaison 3 peut s'opérer au moment de la pose de sorte qu'à chaque fois, le panneau 11 solaire repose parfaitement en appui sur la surface plane 4 des pièces de liaison 3.

Comme l'illustre la [Fig.6], le couplage à emboîtement entre chaque montant 2 et la pièce de liaison 3 associée est un couplage à emboîtement coulissant, le glissement s'opérant suivant une direction parallèle à la direction d'emboîtement, c'est-à-dire suivant une direction parallèle à l'axe YY' autour duquel la pièce de liaison 3 est montée à pivotement.

Pour éviter un démontage intempestif de la liaison entre la pièce de liaison 3 et le montant 2, il est préférable de verrouiller ce coulissement une fois le couplage opéré. A cet effet, ledit ensemble 1 comprend deux pièces de verrouillage 5. Chaque pièce de verrouillage 5 est, à l'état couplé à emboîtement coulissant des parties mâle et femelle d'un montant 2 et d'une pièce de liaison 3 associée, montée mobile par rapport auxdites parties entre une position, dite de verrouillage du déplacement à coulissement desdites parties, dans laquelle elle vient à recouvrement desdites parties pour interdire un déplacement à coulissement desdites parties, et une position, dite verrouillée, dans laquelle les parties mâles et femelles sont découvertes pour autoriser un déplacement relatif à coulissement desdites parties entre elles.

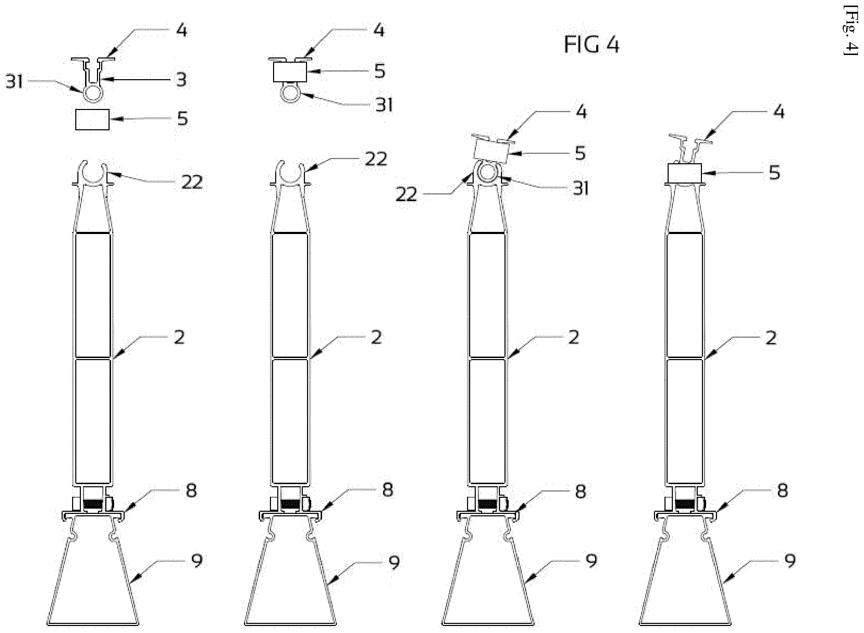

Dans les exemples représentés, chaque pièce de verrouillage 5 se présente sous forme d'une bague, en l'occurrence ici carrée, comme illustré à la [Fig.5]. Cette bague est déplaçable à coulissement pour passer de la position déverrouillée à la position de verrouillage et inversement. Comme illustré à la [Fig.4], cette bague est positionnable autour de la pièce de liaison 3 à l'état désaccouplé des parties mâle et femelle complémentaires de la pièce de liaison 3 et du montant 2 comme le montrent les deux premières vues de la [Fig.4]. La bague est, à cet effet, introduite par la partie mâle ou femelle de la pièce de liaison 3 sur ladite pièce de liaison 3 jusqu'à une position de fin de course qui peut être matérialisée par exemple par les ailes de la pièce de liaison 3. La bague est donc amenée dans une position déverrouillée dans laquelle elle entoure la pièce de liaison 3 dans la zone de la pièce de liaison 3 disposée hors de la partie mâle ou femelle de ladite pièce de liaison 3, c'est-à-dire ici au niveau des branches coudées de ladite pièce de liaison 3. La pièce de liaison 3 prééquipée de la pièce de verrouillage 5 et le montant 2 sont couplés à emboîtement coulissant par coopération des parties mâle et femelle, comme l'illustre la [Fig.6] qui matérialise le début de l'emboîtement par déplacement à coulissement du corps à l'intérieur du fourreau puis, la pièce de verrouillage 5 est déplacée à coulissement jusqu'à la position de verrouillage dans laquelle elle entoure la pièce de liaison 3 au niveau de la partie mâle 31, ou respectivement femelle 32, de ladite pièce de liaison 3. Dans cette position de verrouillage, la pièce de verrouillage 5 peut être en butée contre une surface d'appui portée par le montant 2 et formée ici par deux épaulements coplanaires du montant sur lesquels repose à chaque fois un bord de la bague. Ces butées sont visibles à la dernière vue de la [Fig.4]. Ainsi, la bague est limitée en déplacement axial. On note que cette conception ne nécessite pas d'outil pour le verrouillage, ou respectivement le déverrouillage, qui s'opèrent par simple coulissement de la bague et que la bague est, sous l'effet de son propre poids, rappelée en position de verrouillage, en configuration d'utilisation de l'ensemble.

Bien évidemment, l'extrémité du montant 2 opposée à celle munie de la partie mâle, ou respectivement femelle du montant 2, peut être conçue pour permettre un maintien aisé à l'état dress é dudit montant 2. Ainsi, dans l'exemple de la [Fig.6], on remarque que chaque montant 2 est muni, à l'opposé de sa partie mâle 21, ou respectivement femelle 22, de couplage à la pièce de liaison 3 d'une semelle 8 formant une glissière d'axe longitudinal orthogonal à l'axe longitudinal XX' du montant 2. L'axe longitudinal de la semelle 8 du montant 2 et l'axe longitudinal du fourreau constitutif de la partie femelle 22 ou l'axe longitudinal du corps allongé constitutif de la partie mâle 31 équipant ledit montant 2 s'étendent suivant des directions parallèles.

L'ensemble comprend par ailleurs au moins deux rails 9 aptes à coopérer chacun à emboîtement à coulissement avec une semelle 8 d'un montant 2. Le montage d'un ensemble 1, tel que décrit ci-dessus, comprend donc les opérations :
- de couplage de deux montants à deux rails 9 parallèles écartés l'un de l'autre d'une distance fonction des caractéristiques du panneau solaire à soutenir,
- de positionnement d'une pièce de verrouillage sur chaque pièce de liaison 3,
- de couplage à emboîtement des parties mâle et femelle du montant et de la pièce de liaison 3
- d'orientation angulaire de la pièce de liaison 3 par rotation autour de l'axe YY' orthogonal à l'axe longitudinal XX' du montant 2 pour permettre à la surface plane 4 des pièces de liaison 3 de s'étendre dans un même plan et former une surface plane d'accueil par appui du panneau 11 solaire. Ces opérations peuvent s'opérer de manière rapide et aisée sans outil, notamment lorsque la semelle de chaque montant 2 est prééquipée d'une vis de serrage, comme dans les exemples représentés en vue de son maintien sur un rail.

## Revendications

1. Ensemble (1) pour le soutien à l'état incliné de panneau (11) solaire, ledit ensemble (1) comprenant au moins deux montants (2) et deux pièces de liaison (3), chaque pièce de liaison (3) étant couplable à une extrémité d'un montant (2) pour s'interposer entre le montant (2) et le panneau (11) à soutenir, **caractérisé en ce que** les montants (2), qui présentent chacun un axe longitudinal (XX'), sont de longueur différente, **en ce que** chaque montant (2) et sa pièce de liaison (3) associée comprennent, pour leur couplage qui est un couplage à emboîtement, des parties de formes complémentaires dites l'une, mâle (21 ; 31), l'autre, femelle (32 ; 22), **en ce que** la partie femelle (22), ou respectivement mâle (21), de chaque montant (2) est identique d'un montant (2) à un autre, **en ce que** chaque pièce de liaison (3) est munie, à l'opposé de sa partie mâle (31), ou respectivement femelle (32), d'une surface plane (4) pour former une surface d'appui du panneau (11) à soutenir, et **en ce que** chaque pièce de liaison (3) est, à l'état couplé à emboîtement avec le montant (2) associé, une pièce de liaison (3) orientable montée à pivotement autour d'un axe (YY') orthogonal à l'axe longitudinal (XX') du montant (2) pour pouvoir faire varier l'angle (α) formé par la surface plane (4) de la pièce de liaison (3) avec l'axe longitudinal (XX') du montant (2).

2. Ensemble (1) pour le soutien à l'état incliné de panneau (11) solaire selon la revendication 1, **caractérisé en ce que** la partie mâle (31), ou respectivement femelle (32), de chaque pièce de liaison (3) est identique d'une pièce de liaison (3) à une autre.

3. Ensemble (1) pour le soutien à l'état incliné de panneau (11) solaire selon l'une des revendications 1 ou 2, **caractérisé en ce que** chaque pièce de liaison (3) est identique d'une pièce de liaison (3) à une autre.

4. Ensemble (1) pour le soutien à l'état incliné de panneau (11) solaire selon l'une des revendications 1 à 3, **caractérisé en ce que** le couplage à emboîtement entre chaque montant (2) et la pièce de liaison (3) associée est un couplage à emboîtement coulissant suivant une direction parallèle à l'axe (YY') autour duquel la pièce de liaison (3) est montée à pivotement.

5. Ensemble (1) pour le soutien à l'état incliné de panneau (11) solaire selon la revendication 4, **caractérisé en ce que** ledit ensemble (1) comprend deux pièces de verrouillage (5), chaque pièce de verrouillage (5) étant, à l'état couplé à emboîtement coulissant des parties mâle (21 ; 31) et femelle (32 ; 22) d'un montant (2) et d'une pièce (3) de liaison associée, montée mobile par rapport auxdites parties entre une position, dite de verrouillage du déplacement à coulissement desdites parties, dans laquelle elle vient à recouvrement desdites parties, pour interdire un déplacement à coulissement desdites parties, et une position, dite déverrouillée, dans laquelle les parties mâle (21 ; 31) et femelle (32 ; 22) sont découvertes pour autoriser un déplacement relatif à coulissement desdites parties entre elles.

6. Ensemble (1) pour le soutien à l'état incliné de panneau (11) solaire selon la revendication 5, **caractérisé en ce qu'**au moins l'une des pièces de verrouillage (5) se présente sous forme d'une bague coulissante positionnable autour de la pièce de liaison (3) à l'état désaccouplé des parties mâle et femelle complémentaires de la pièce de liaison (3) et du montant (2).

7. Ensemble (1) pour le soutien à l'état incliné de panneau solaire selon l'une des revendications 1 à 6, **caractérisé en ce que** les parties femelle et mâle de formes complémentaires d'un montant (2) et de la pièce de liaison (3) associée se présentent, pour ladite partie femelle (22 ; 32), sous forme d'un fourreau au moins partiellement cylindrique fendu longitudinalement ouvert à au moins l'une de ses extrémités, et pour ladite partie mâle (31 ; 21), sous forme d'un corps allongé au moins partiellement cylindrique, et **en ce que** le corps de la partie mâle (31 ; 21) est, à l'état couplé à emboîtement desdites parties mâle et femelle, disposé au moins partiellement à l'intérieur du fourreau de la partie femelle (22 ; 32).

8. Ensemble (1) pour le soutien à l'état incliné de panneau (11) solaire selon l'une des revendications 1 à 7, **caractérisé en ce que** chaque pièce de liaison (3) comprend deux branches (6) coudées reliées à l'une de leurs extrémités par la partie mâle (31), ou respectivement femelle (32), de la pièce de liaison (3), **en ce que** la portion de chaque branche (6) qui s'étend entre le coude et l'extrémité libre de la branche (6) forme une aile (7) de la pièce de liaison (3), **en ce que** lesdites ailes (7) sont coplanaires pour former la surface plane (4) de la pièce de liaison (3), et **en ce que** lesdites ailes (7) se développent longitudinalement suivant une direction transversale à la direction de développement longitudinal de la partie mâle (31), ou respectivement femelle (32), de la pièce de liaison qui est une partie allongée.

9. Ensemble (1) pour le soutien à l'état incliné de panneau (11) solaire selon l'une des revendications 1 à 8, **caractérisé en ce que** chaque montant (2) est muni, à l'opposé de sa partie mâle (21), ou respectivement femelle (22), de couplage à la pièce de liaison (3), d'une semelle (8) formant une glissière d'axe longitudinal orthogonal à l'axe longitudinal (XX') du montant (2).

10. Ensemble (1) pour le soutien à l'état incliné de panneau (11) solaire selon la revendication 9 prise en combinaison avec la revendication 7, **caractérisé en ce que** l'axe longitudinal de la semelle (8) du montant (2) et l'axe longitudinal du fourreau constitutif de la partie femelle (22) ou l'axe longitudinal du corps allongé constitutif de la partie mâle (21) équipant ledit montant (2) s'étendent suivant des directions parallèles.

11. Ensemble (1) pour le soutien à l'état incliné de panneau solaire selon l'une des revendications 9 ou 10, **caractérisé en ce qu'**il comprend au moins deux rails (9) aptes à coopérer chacun à emboîtement à coulissement avec une semelle (8) d'un montant (2).

12. Installation (10) pour la production d'énergie comprenant au moins un panneau (11) solaire et un ensemble (1) pour le soutien à l'état incliné dudit panneau (11) solaire, **caractérisé en ce que** ledit ensemble (1) est conforme à l'une des revendications 1 à 11.
